# EUROPÄISCHE PATENTSCHRIFT

(11) **EP 3 860 961 B1**
(45) Veröffentlichungstag und Bekanntmachung des Hinweises auf die Patenterteilung: **02.12.2026**
(21) Anmeldenummer: 19782579.7
(22) Anmeldetag: 01.10.2019
(51) Int. Cl.: C04B 18/28, C04B 28/02

(54) **FÜLLSTOFF AUS SORTIERTEN RESTSTOFFEN FÜR DIE HERSTELLUNG ZEMENTGEBUNDENER FORMKÖRPER**
FILLER MADE FROM SORTED WASTE MATERIALS FOR THE PRODUCTION OF CEMENT-BOUND SHAPED BODIES
CHARGE CONSTITUÉE DE RÉSIDUS TRIÉS POUR LA FABRICATION DE CORPS MOULÉS LIÉS AVEC DU CIMENT

(30) Priorität: 01.10.2018 DE 102018124254
(43) Veröffentlichungstag der Anmeldung: 11.08.2021
(73) Patentinhaber: Terion AG, 9470 Buchs (CH)
(72) Erfinder: STEINMÜLLER, Jürgen, 63533 Mainhausen (DE); MERKEL, Peter, 97318 Kitzingen (DE); DREISMANN, Martin, 97350 Mainbernheim (DE)
(74) Vertreter: Tegethoff, Sebastian
(86) Internationale Anmeldenummer: PCT/EP2019/076630
(87) Internationale Veröffentlichungsnummer: WO 2020/070151

(56) Entgegenhaltungen:
- CN-A- 103 539 425
- DE-A1- 19 611 454
- SU-A1- 606 847
- PANTAWEE SAKSITH ET AL: "Utilization of hemp concrete using hemp shiv as coarse aggregate with aluminium sulfate [Al2(SO4)3] and hydrated lime [Ca(OH)2] treatment", CONSTRUCTION AND BUILDING MATERIALS, vol. 156, 31 December 2017 (2017-12-31), pages 435 - 442, XP085226782, ISSN: 0950-0618, DOI: 10.1016/J.CONBUILDMAT.2017.08.181

## Beschreibung

Die vorliegende Patentanmeldung bezieht sich auf einen Füllstoff aus sortierten Reststoffen für die Herstellung zementgebundener Formkörper, aus einen unter Verwendung des Füllstoffes hergestellten Formkörper sowie Verfahren zur Herstellung derselben, wie durch die unabhängigen Patentansprüche beschrieben.

Konventioneller Beton wird hergestellt aus Zement, Gesteinskörnung bzw. Betonzuschlag (Sand, Kies oder Split) und Anmachwasser. Er kann außerdem Betonzusatzstoffe und Betonzusatzmittel (z.B. Abbindebeschleuniger, -verzögerer) enthalten. Nach DIN EN 206-1 (s.a. DIN 1045-1) wird Beton in Abhängigkeit von der Trockenrohdichte (pT) in Schwerbeton (pT : >2600 kg/m³) , Normalbeton (pT : >2000 bis 2600 kg/m³) und Leichtbe-ton (pT : 800 bis 2000 kg/m³) eingeordnet. Bei Trockenrohdichten pT < 800 kg/m³ spricht man von Infra- bzw. auch Ultra-Leichtbeton, auf deren Vertreter die Norm DIN EN 206-1 allerdings nicht anwendbar ist. Nach DIN EN 206-1 liegt der Mindest-Zementgehalt in den Betonkörpern je nach Expositionsklasse zwischen 260 und 360 kg/m³ - für die Expositionsklasse XFI - XF4 liegen die Mindestzementgehalte bei ~300 - 340 kg/m³ - und der beim Anrühren des Betons relevante Wasser/Zement-Wert zwischen 0.45 und 0.65. Hinsichtlich der Wärmeleitfähigkeit 0- in [W/(m·K)]; auch als Wärmeleitzahl bzw. Wärmeleitfähigkeitskoeffizient bezeichnet) zeigt sich allgemein, dass die A-Werte mit der Trockenrohdichte des Betons ansteigen. So liegen die A-Werte für Normalbeton bei 1,3 - 2,3 W/(m·K), für Leichtbeton bei 0,2 - 1,35 W/(m·K) und für die Infra-Leichtbetone bei 0,04 -0,3 W/(m·K). Aufgrund der möglichen stofflichen Variationen der Gesteinskörnung (z.B.: Normalgesteinskörnung (Sand, Split, Kies) bei Normalbeton; Bläh-Glas, -Schiefer, -Ton, Tuff, Lava, Kesselsand und Naturbims bei Leichtbeton), des Zementgehaltes der Art des Zementes und hinsichtlich der mechanischen Festigkeiten wie Druckfestigkeit und Biegezugfestigkeit weisen Normal- und Leichtbeton relativ große Bandbreiten auf (siehe DIN EN 206-1:2000-Kapitel 4.3.1 -Tabellen 7 und 8).

Die Publikation von Pantawee und Kollegen (Pantawee Sakisch et al: Construction and Materials, Bd. 156, 31. Dezember 2017, Seiten 435-442) bezieht sich auf Hanfschnitt als Füllstoff bei der Herstellung eines zementgebundenen Formkörpers.

Der Nachteil bei allen Betonarten ist der, dass wertvolle Rohstoffe und Ressourcen wie beispielsweise Sand, Tone, Blähschiefer, Bims, Tuff und Lava zum Einsatz kommen, deren natürliche Lagerstätten nicht unendlich sind und im Sinne einer nachhaltigen Wirtschaft geschont werden sollten.

Es besteht daher ein Bedarf an Betonwerkstoffen, die eine Unabhängigkeit von derartigen natürlichen Lagerstätten durch den Einsatz von alternativen Füllstoffen bieten, die sich möglichst einfach und wirtschaftlich herstellen und verarbeiten lassen und den bekannten Betonwerkstoffen vergleichbare, wenn nicht bessere Eigenschaften aufweisen.

Diese Aufgabe wird durch die Merkmale der unabhängigen Patentansprüche gelöst, wobei zweckmäßige Ausführungsformen durch die Merkmale der Unteransprüche beschrieben sind.

Erfindungsgemäß wird ein Füllstoff zur Verfügung gestellt. Der Füllstoff wird aus einem Stoffgruppen-Gemisch aus zerkleinerten, "sortierten Reststoffen" und deren Konditionierung mit chemischen Reagenzien / Verbindungen in Gegenwart von Wasser hergestellt. Im Sinne der vorliegenden Erfindung umfasst die Mischung des Stoffgruppen-Gemischs aus zerkleinerten und sortierten Reststoffen Materialien, die aus jeder der folgenden Gruppen ausgewählt sind, umfassend die Stoffgruppen:
- PPK, bestehend aus Papier, Pappe und Kartonage;
- Kunststoffe; und
- Inertes, bestehend aus Glas, Keramik, Porzellan, Steine und Steingut; und
- Textilien; und
- Holz,
wobei die eingesetzten Stoffgruppen in Anteilen der relativen Trockenmasse aus 20 %-Trockenmasse PPK, 40 %-Trockenmasse Kunststoffe, 20 %-Trockenmasse Inertes, 15 %-Trockenmasse Textilien, sowie 5 %-Trockenmasse Holz vorhanden sind. Dieses Stoffgruppen-Gemisch wird im Mischer nach Zugabe von Reagenzien konditioniert, wobei die chemischen Reagenzien Aluminiumsulfat und Calciumoxid oder Aluminiumsulfat und Calciumhydroxid sind. Nach einer Lagerungs-/Konditionierungszeit von 1 - 3 Tagen kann der hierbei erhaltene Füllstoff mit Zement und weiterem Wasser zu einem zementgebundenen Formkörper verarbeitet werden.

Um die mechanische Festigkeit des Zementsteines zu erhöhen, kann bei dessen Herstellung aus dem Füllstoff neben Zement und Wasser noch Kaolin und Calciumformiat zugegeben werden.

Die hierbei erhaltenen Zementsteine weisen eine hohe Feuerwiderstandsbeständigkeit auf.

Unter dem Gesichtspunkt der Verwertung verschiedener Reststoffe ist es ein Ziel mit dem erfindungsgemäßen Füllstoff einen kostengünstigen Zuschlagsstoff für Zementsteine herzustellen, der im Zementstein eingebunden die Herstellung zementgebundener Materialien (z.B. Formsteine und Mörtel) ähnlich den Eigenschaften von Leichtbeton ermöglicht. Erreicht wird dabei ein Material, das eine geringe Trockenrohdichte und geringe Wärmeleitfähigkeit (λ) mit einer mechanischen Festigkeit kombiniert, die für die Erstellung einfacher Bauten geeignet ist.

Gemäß der Erfindung wird ein Füllstoff bzw. Betonzuschlagstoff zur Verfügung gestellt, der aus Stoffgruppen durch mechanische Zerkleinerung und Homogenisierung (Mischen) und chemische Behandlungsschritte hergestellt wird. Diese Stoffgruppen kön-nen auch im Rahmen der Sortierung von Reststoffen gewonnen werden, wodurch neben der Realisierung der Wiederverwertung von Reststoffen auch relativ kostengünstige Materialien genutzt werden können.

In nachstehender Tabelle sind die einsetzbaren Stoffgruppen und deren Massen-Anteile für die Herstellung des erfindungsgemäßen Füllstoffes aufgeführt.

| **Stoffgruppe** | **Beispiele für die Stoffgruppenmaterialien** | **Relativer 89-Anteil** / Masse% |
|---|---|---|
| Papier, Pappe, Kartonagen (PPK) | Verpackungen, Druckerzeugnisse, Pappordner, ... | 20 |
| Kunststoffe | Verpackungen, Folien, CD/DVD-Hüllen, ... | 40 |
| Inertes | Glas, Keramik, Porzellan, Steine u. | 20 |
| | Steingut, ... | |
| Textilien | Bekleidungstextilien, Gardinen, Tep- piche, Stoffreste, ... | 15 |
| Holz | Holzkisten, Bretter, Spanplatten, ... | 5 |

Die für die Herstellung des Füllstoffes zu verwendende Stoffgruppenmischung wird vorzugsweise in einem Sieb-Querstromzerspaner zerkleinert. Bei dieser Art der Zerkleinerung aus den Stoffgruppen PPK, Kunststoffe, Textilien und Holz entstehen stückige und faserartige Partikel, die in einem Zementstein die Biegezugfestigkeit erhöhen. Die maximale Ausdehnung der Partikel des Mahlgutes ist dabei vorzugsweise zu 80 Masse-% kleiner 4 mm und zu 98 Masse-% kleiner 10 mm.

Die zerkleinerte Stoffgruppenmischung wird darauf in einem konventionellen Mischer mit festem Aluminiumsulfat (Al₂(SO₄)₃ • xH₂O) sowie Calciumoxid oder Calciumhydroxid versetzt und gemischt. Das Aluminiumsulfat kann hierbei wasserfrei (x = 0) oder mit den im Handel typischerweise anzutreffenden Wassergehalten (x > 0) eingesetzt werden.

Bei Verwendung von Aluminiumsulfat-Hydrat (z.B. Al₂(SO₄)₃ • 14H₂O, Al₂(SO₄)₃ · • 18H₂O, ...) können entsprechend dem tatsächlichen Wassergehalt des eingesetzten Aluminiumsulfates (Kristallwasser sowie Haftwasser) höhere Masseanteile an Aluminiumsulfat-Hydrat als an wasserfreiem Aluminiumsulfat eingesetzt werden.

Als in wässrigem System alkalisch reagierende Komponente kann entweder Calciumoxid (CaO) oder Calciumhydroxid (Ca(OH)₂) eingesetzt werden, da Calciumoxid unter den wässrigen Bedingungen der Herstellung des Füllstoffes sowieso mit Wasser unter Bildung von Calciumhydroxid reagiert.

Die Wärmetönung spielt bei der Bildung von Calciumhydroxid aus Calciumoxid keine entscheidende Rolle. Bezogen auf die absolute Trockenmasse der zerkleinerten Stoffgruppenmischung werden hierbei vorzugsweise 5.5 bis 6 Masse-% an nominell wasserfreiem Aluminiumsulfat eingesetzt.

Bei der Herstellung des Füllstoffes soll das Masseverhältnis von Aluminiumsulfat (Al₂(SO₄)₃) zu Calciumoxid (CaO) bei 1:1 liegen.

Nach Mischen der Materialien wird unter weiterem Mischen Wasser zugegeben, bis eine absolute Zielfeuchte des Gesamtgemenges von ~30 - 40 Masse-% erreicht ist.

Nach einer Lagerung des Gesamtgemenges wie beschrieben für eine Reaktionszeit von vorzugsweise 1 bis 3 Tagen ist die Herstellung des Füllstoffes abgeschlossen.

Dieser feuchte Füllstoff kann vor der Verarbeitung zu einem Zementstein so gelagert werden, dass er nicht austrocknet. Tut er es doch, kann erneut Wasser hinzugefügt werden, um die notwendige Zielfeuchte wiederherzustellen.

Unter Verwendung oben beschriebenen Füllstoffes sowie Zement, Wasser und gegebenenfalls Kaolin und Calciumformiat (Ca(HCOO)₂) wird ein zementgebundener Formkörper hergestellt.

Die optionalen Zusatzkomponenten Kaolin und Calciumformiat dienen hierbei der Erhöhung der mechanischen Festigkeitswerte Druckfestigkeit und Biegezugfestigkeit gegenüber dem Zementstein, der ohne Kaolin und Calciumformiat-Zusatz hergestellt wird.

Zur Herstellung des erfindungsgemäßen Formkörpers wird in einem konventionellen Mischer unter Mischen zu dem beschriebenen Füllstoff Zement gegeben. Anschließend wird Wasser zugesetzt und das Ganze im Mischer gemischt. Die für die Erfindung relevante Menge an Zement beträgt 70 ± 1 Masse-% bezogen auf die Trockenmasse des Füllstoffes. Der absolute Gesamtwassergehalt dieser Zementstein-Mischung sollte nicht zuletzt aus Gründen der Verarbeitbarkeit bei 42 Masse-% liegen.

In unmittelbarem Anschluss an die Herstellung der Zementstein-Mischung wird diese in eine Schalungsform eingearbeitet. Nach Abbinden und Teilerhärten kann der Zementstein ausgeschalt und bis zum weitestgehenden Abschluss des Erhärtungsprozesses (nach ca. 28Tagen) gelagert werden.

Dieser erfindungsgemäße Zementstein weist eine Trockenrohdichte von 1,1 · 10³ kg/m³ sowie eine Druck- bzw. Biegezug-Festigkeit von 5,6 N/mm² bzw. 2,3 N/mm² auf. Die anhand eines 500x500x240 mm³ Prüfkörpers (Dicke D = 240mm) durchgeführte Feuerwiderstandsprüfung nach DIN 4102-2 ergab einen Feuerwiderstand entsprechend den Anforderungen an Bauteile der Feuerwiderstandsklasse F120

In einer alternativen Ausführungsform des Formkörpers werden in einem konventionellen Mischer zu dem erfindungsgemäßen Füllstoff wie beschrieben Kaolin (China-Clay) und Zement gegeben. Anschließend wird eine Lösung von Calciumformiat in Was- ser zugesetzt und das Ganze im Mischer gemischt. Bezogen auf die absolute Trockenmasse des Füllstoffes werden hierbei 6 Masse-% Calciumformiat (Ca(HCOO)₂) gelöst in Wasser eingesetzt.

Die für diese Variante relevante Menge an Zement beträgt vorzugsweise 60 ± 1 Masse-% bezogen auf die Trockenmasse des Füllstoffes. Die Masse des zugegebenen Kaolins ist im Rahmen der Erfindung auf die eingesetzte Zementmasse zu beziehen und beträgt vorzugsweise 9 - 9,5 Masse-%. Der absolute Gesamtwassergehalt dieser Mischung aus Füllstoff, Kaolin, Zement, Calciumformiat und Wasser sollte nicht zuletzt aus Gründen der Verarbeitbarkeit bei vorzugsweise ~37 Masse-% der Gesamtmischung liegen.

In unmittelbarem Anschluss an die Herstellung der alternativen Zementstein Mischung wird diese in eine Schalungsform eingearbeitet. Nach Abbinden und Teilerhärten kann der Zementstein ausgeschalt und bis zum weitestgehenden Abschluss des Erhärtungsprozesses (nach ca. 28 Tagen) gelagert werden.

Dieser alternative Zementstein weist eine Trockenrohdichte von 1.1 · 10³ kg/m³ sowie eine Druck- bzw. Biegezug-Festigkeit von 9.5 N/mm² bzw. 3.2 N/mm² auf. Die anhand eines 500x500x240 mm³ Prüfkörpers (Dicke D = 240mm) durchgeführte Feuerwiderstandsprüfung nach DIN 4102-2 ergab einen Feuerwiderstand entsprechend den Anforderungen an Bauteile der Feuerwiderstandsklasse F120.

Die Vorteile der Zementsteine nach der Erfindung können wie folgt zusammengefasst werden:

Die Zementsteine können innerhalb von 8 Stunden aus der Schalung entfernt wer- den, obwohl der Erhärtungsprozess (bis ca. 28 Tage) noch nicht vollständig abgeschlossen ist.

Die Füllstoffpartikel bedingen eine gegenüber Normalbeton geringere Trockenrohdichte der Zementsteine von 1.1-10³ kg/m³. Aufgrund dieser Trockenrohdichte sind die Zementsteine in die Kategorie "Leichtbeton" einzuordnen.

Bei den erfindungsgemäßen Zementsteinen kann der komplette Anteil des im "Leichtbeton" üblichen Gesteinskörnungs-Anteiles durch den erfindungsgemäßen Füllstoff ersetzt werden. Somit wird unter Verwendung der beschriebenen Stoffgruppen ein wertvoller neuartiger Rohstoff hergestellt, wobei sonst üblicherweise verwendete Ressourcen wie beispielsweise Sand, geeignete Tone, Blähschiefer, Bims, Tuff und Lava vollständig geschont werden. Letzteres bedingt auch eine Unabhängigkeit von derartigen natürlichen Lagerstätten.

Der erfindungsgemäße Zementstein zeigt gemäß DIN 4102-2 (s.a. DIN EN 13501-2) eine Feuerwiderstandklasse entsprechend F120. Dies mag angesichts der brenn- baren Stoffgruppen-Anteile im Füllstoffverwundern.

Unter Berücksichtigung, dass diese Stoffgruppen (PPK, Kunststoffe, Textilien und Holz) bei Hitzeeinwirkung thermisch induzierten Veränderungen (Schmelzen, thermische Zersetzung und Verdampfung) unterliegen, die thermische Energie aufnehmen und damit einen geringeren Temperaturanstieg des Gesamtmaterials bedingen.

Aufgrund der porösen Struktur des erfindungsgemäßen Zementsteins führen die bei der Hitzeeinwirkung entstehenden gasförmigen Produkte nicht zu einem Druckanstieg innerhalb des Zementsteins, wodurch der Zementstein inneren Spannungen mit ggf. Rissbildung ausgesetzt würde. Weiterhin führen die auf der hitzeeinwirkenden Oberfläche des Zementsteins austretenden verflüssigten Kunststoffe und brennbaren gasförmigen Zersetzungsprodukte dazu, dass bei deren Verbrennung der Sauerstoffpartialdruck an der hitzeeinwirkenden Oberfläche stark abgesenkt wird. Dadurch kann sich die Flammfront nicht bis in den Zementstein ausbreiten.

Weitere Eigenschaften der vorliegenden Erfindung ergeben sich aus den folgenden, nicht beschränkenden, Darstellungen. Darin zeigt:
Fig. 1 ein Blockfließbild des Verfahrens gemäß der Erfindung; und
Fig. 2 ein Bild des Füllstoffes gemäß der Erfindung

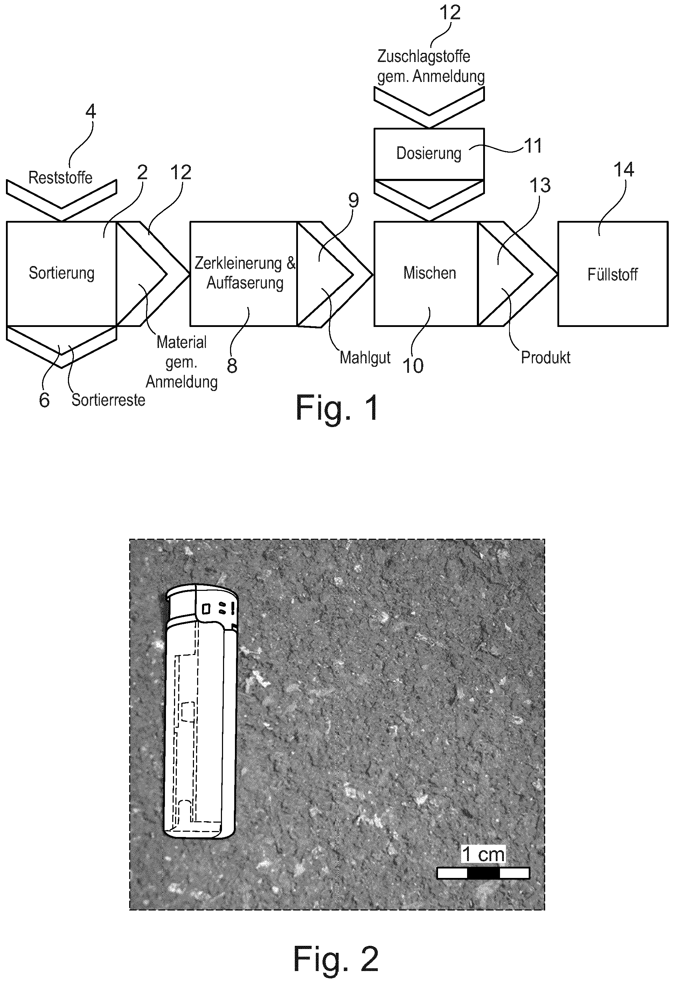

Die Fig. 1 zeigt in Form eines Blockfließbildes eine Ausführungsform des Verfahrens zur Herstellung eines Füllstoffes gemäß der Erfindung.

In einem ersten Schritt 2 werden Reststoffe 4 bestehend aus 20% Papier, Pappe, Kartonagen, 40% Kunststoffen, 20% inertem Material, 15% Textilien sowie 5% Holz sortiert, wobei Sortierreste 6 ausgeschieden werden.

Die Reststoffe 4 werden in Schritt 5 an einen Sieb-Querstromzerspaner übergeben, wo sie in Schritt 8 zu Mahlgut zerkleinert werden, wobei die maximale Ausdehnung der Partikel des Mahlgutes dabei vorzugsweise zu 80 Masse-% kleiner 4 mm und zu 98 Masse-% kleiner 10 mm ist.

Das Mahlgut 9 aus Schritt 8 wird darauf in einem konventionellen Mischer in Schritt 10 mit in einem Schritt 11 dosiertem festem Aluminiumsulfat (Al₂(SO₄)₃ · xH₂O) sowie Calciumoxid als Zuschlagstoffe 12 versetzt und gemischt. Das verwendete Aluminiumsulfat ist dabei wasserfrei (x = 0) oder weist den im Handel typischerweise anzutreffen- den Wassergehalten (x > 0) auf.

Das Masseverhältnis von Aluminiumsulfat (Al₂(SO₄)₃) zu Calciumoxid (CaO) liegt dabei bei 1:1.

Dem Mischvorgang in Schritt 10 wird weiteres Wasser zugegeben, bis eine absolute Zielfeuchte des Gesamtgemenges von ~30 - 40 Masse-% erreicht ist.

Abschließend wird in Schritt 14 das Gesamtgemenge 13 aus Schritt 10 für eine Reaktionszeit von 1 bis 3 Tagen gelagert, womit die Herstellung des Füllstoffes abgeschlossen ist.

Die Fig. 2 zeigt ein Bild des Füllstoffes, wobei insbesondere die Struktur und Größe der Körnung erkennbar wird. Das in dem Bild erkennbare Feuerzeug dient lediglich dem Größenvergleich und bildet nicht Teil der Offenbarung.

## Patentansprüche

1. Ein Füllstoff zur Herstellung zementgebundener Formkörper, umfassend ein Stoffgruppen-Gemisch aus einer Mischung von Materialien aus zerkleinerten und sortierten Reststoffen, konditioniert mit chemischen Reagenzien/Verbindungen in Gegenwart von Wasser, wobei die chemischen Reagenzien Aluminiumsulfat und Calciumoxid oder Aluminiumsulfat und Calciumhydroxid sind ,wobei die Mischung des Stoffgruppen-Gemischs aus zerkleinerten und sortierten Reststoffen Materialien umfasst, die aus jeder der folgenden Gruppen ausgewählt sind, umfassend die Stoffgruppen:
• PPK, bestehend aus Papier, Pappe und Kartonage;
• Kunststoffe; und
• Inertes, bestehend aus Glas, Keramik, Porzellan, Steine und Steingut; und
• Textilien; und
• Holz,
wobei die eingesetzten Stoffgruppen in Anteilen der relativen Trockenmasse aus 20 %-Trockenmasse PPK, 40 %-Trockenmasse Kunststoffe, 20 %-Trockenmasse Inertes, 15 %-Trockenmasse Textilien, sowie 5 %-Trockenmasse Holz vorhanden sind.

2. Der Füllstoff nach Anspruch 1, wobei die eingesetzten Stoffgruppen zumindest teilweise als faserartige Partikel vorgesehen sind.

3. Der Füllstoff nach Anspruch 1, wobei bezogen auf die absolute Trockenmasse der zerkleinerten Stoffgruppenmischung 5.5 bis 6 Masse-% wasserfreies Aluminiumsulfat eingesetzt ist.

4. Der Füllstoff nach einem der Ansprüche 1 bis 3, wobei das Masseverhältnis bei der Auswahl von Aluminiumsulfat (Al₂(SO₄)₃) zu Calciumoxid (CaO) bei 1:1 liegt.

5. Der Füllstoff nach einem der vorhergehenden Ansprüche, wobei die Mischung eine Feuchte von 30 - 40 Masse-% aufweist.

6. Ein Formkörper, hergestellt aus dem Füllstoff nach einem der vorhergehenden Ansprüche 1 bis 5, welcher mit Zement und Wasser zu dem zementgebundenen Formkörper verarbeitet ist.

7. Der Formkörper nach Anspruch 6, wobei die Menge an Zement 70 ± 1 Masse-% bezogen auf die Trockenmasse des Füllstoffes beträgt.

8. Der Formkörper nach Anspruch 6, wobei zur Erhöhung der mechanischen Festigkeit des Formkörpers neben Füllstoff, Zement und Wasser zusätzlich Kaolin und Calciumformiat enthalten sind.

9. Der Formkörper nach Anspruch 8, wobei bezogen auf die absolute Trockenmasse des Füllstoffes 6 Masse-% Calciumformiat Ca(HCOO)₂ gelöst in Wasser eingesetzt ist.

10. Der Formkörper nach einem der Ansprüche 6 bis 9, wobei die Menge an Zement 60 ± 1 Masse-% bezogen auf die Trockenmasse des Füllstoffes beträgt.

11. Der Formkörper nach Anspruch 8, wobei die Masse des zugegebenen Kaolins bezogen auf die eingesetzte Zementmasse 9 - 9.5 Masse-% beträgt.

12. Ein Verfahren zur Herstellung eines Füllstoffes umfassend die Schritte
• Bereitstellung eines Gemisches umfassend ein Stoffgruppen-Gemisch aus einer Mischung von Materialien aus zerkleinerten und sortierten Reststoffen, konditioniert mit chemischen Reagenzien/Verbindungen in Gegenwart von Wasser, wobei die Mischung des Stoffgruppen-Gemischs aus zerkleinerten und sortierten Reststoffen Materialien umfasst, die aus jeder der folgenden Gruppen ausgewählt sind, umfassend die Stoffgruppen:
i. PPK, bestehend aus Papier, Pappe und Kartonage;
ii. Kunststoffe; und
iii. Inertes, bestehend aus Glas, Keramik, Porzellan, Steine und Steingut; und
iv. Textilien; und
v. Holz,
wobei die eingesetzten Stoffgruppen in Anteilen der relativen Trockenmasse aus 20 %-Trockenmasse PPK, 40 %-Trockenmasse Kunststoffe, 20 %-Trockenmasse Inertes, 15 %-Trockenmasse Textilien, sowie 5 %-Trockenmasse Holz vorhanden sind,
• Zerkleinerung des Stoffgruppengemischs sowie Homogenisierung der zerkleinerten Material-Mischung;
• Zugabe der chemischen Reagenzien Aluminiumsulfat zusammen mit Calciumoxid oder Calciumhydroxid und Wasser;
• Lagerung der Mischung für eine definierte Reaktionszeit von 1 bis 3 Tagen.

13. Das Verfahren zur Herstellung eines Füllstoffes nach Anspruch 11, wobei das eingesetzte Stoffgruppengemisch zur Erzeugung faserartiger Partikel in einem Sieb-Querstromzerspaner zerkleinert wird.

14. Das Verfahren zur Herstellung eines Füllstoffes nach einem der Ansprüche 11 oder 12, wobei das zerkleinerte Stoffgruppengemisch in einem konventionellen Mischer mit festem Aluminiumsulfat (Al(SO₄)₃ · xH₂O) zusammen mit Calciumoxid oder Calciumhydroxid versetzt und gemischt wird, wobei das Aluminiumsulfat hierbei wasserfrei (x = 0) oder mit den im Handel typischerweise anzutreffenden Wassergehalten (x > 0) eingesetzt wird.

15. Das Verfahren zur Herstellung eines Füllstoffes nach Anspruch 13, wobei bezogen auf die absolute Trockenmasse der zerkleinerten Stoffgruppenmischung 5.5 bis 6 Masse-% an wasserfreiem Aluminiumsulfat eingesetzt werden.

16. Das Verfahren zur Herstellung eines Füllstoffes nach einem der Ansprüche 12 bis 15, wobei das Masseverhältnis von Aluminiumsulfat (Al(SO₄)₃) zu Calciumoxid (CaO) bei 1:1 liegt.

17. Das Verfahren zur Herstellung eines Füllstoffes nach einem der Ansprüche 12 bis 16, wobei Wasser zugegeben wird, bis eine absolute Zielfeuchte des Gesamtgemenges von 30 -40 Masse-% erreicht ist.

18. Das Verfahren zur Herstellung eines Formkörpers, umfassend die Schritte:
• Bereitstellen eines Füllstoffes hergestellt nach einem der Ansprüche 12 bis 17;
• Mischen des Füllstoffes mit Zement und Wasser sowie Einarbeitung der Masse in Form oder Schalung zur Herstellung des Formkörpers;
• Abbinden des Formkörpers und Entfernen der Form bzw. Schalung;
• Aushärten des Formkörpers für eine definierte Anzahl von Tagen.

19. Das Verfahren zur Herstellung eines Formkörpers nach Anspruch 18, wobei neben Zement und Wasser auch Kaolin und Calciumformiat mit dem Füllstoff gemischt werden.

## Claims

1. A filler for the production of cement-bound moulded bodies, comprising a mixture of material groups consisting of a blend of materials derived from crushed and sorted waste materials, conditioned with chemical reagents/compounds in the presence of water, wherein the chemical reagents are aluminium sulphate and calcium oxide or aluminium sulphate and calcium hydroxide, wherein the mixture of the material group mixture comprising crushed and sorted waste materials comprises materials selected from each of the following groups, comprising the material groups:
• PPK, consisting of paper, paperboard and cardboard;
• plastics; and
• Inert materials, consisting of glass, ceramics, porcelain, stones and earthenware; and
• textiles; and
• wood,
wherein the material groups used are present in proportions, by relative dry weight, of 20 per cent dry weight of PPK, 40 per cent dry weight of plastics, 20 per cent dry weight of inert materials, 15 per cent dry weight of textiles, and 5 per cent dry weight of wood.

2. The filler according to claim 1, wherein the material groups used are at least partially in the form of fibrous particles.

3. The filler according to claim 1, wherein, based on the absolute dry matter of the comminuted mixture of material groups, 5.5 to 6 mass % of anhydrous aluminium sulphate is used.

4. The filler according to any one of claims 1 to 3, wherein the mass ratio of aluminium sulphate (Al₂ (SO₄ )₃) to calcium oxide (CaO) is 1:1.

5. The filler according to one of the preceding claims, wherein the mixture has a moisture content of 30-40 mass %.

6. A moulded body produced from the filler according to any one of the preceding claims 1 to 5, which has been processed with cement and water to form the cement-bound moulded body.

7. The moulded body according to claim 6, wherein the amount of cement is 70 ± 1 % by mass, based on the dry mass of the filler.

8. The moulded body according to claim 6, wherein, in order to increase the mechanical strength of the moulded body, kaolin and calcium formate are additionally contained alongside the filler, cement and water.

9. The moulded body according to claim 8, wherein, based on the absolute dry mass of the filler, 6 mass % of calcium formate Ca(HCOO)₂dissolved in water is used.

10. The moulded body according to any one of claims 6 to 9, wherein the amount of cement is 60 ± 1 mass % based on the dry mass of the filler.

11. The moulded body according to claim 8, wherein the mass of the added kaolin amounts to 9-9.5 mass % relative to the mass of cement used.

12. A method for producing a filler comprising the steps
• providing a mixture comprising a material group mixture of a blend of materials from shredded and sorted waste materials, conditioned with chemical reagents/compounds in the presence of water, wherein the material group mixture of shredded and sorted waste materials comprises materials selected from each of the following groups, comprising the material groups:
i. PPK, consisting of paper, paperboard and cardboard;
ii. plastics; and
iii. Inert materials, consisting of glass, ceramics, porcelain, stones and earthenware; and
iv. textiles; and
v. wood,
whereby the material groups used are present in the following proportions by relative dry weight: 20 per cent dry weight of PPK, 40 per cent dry weight of plastics, 20 per cent dry weight of inert materials, 15 per cent dry weight of textiles, and 5 per cent dry weight of wood,
• crushing of the mixture of material groups and homogenisation of the crushed material mixture;
• adding the chemical reagents aluminium sulphate together with calcium oxide or calcium hydroxide and water;
• Storing the mixture for a defined reaction time of 1 to 3 days.

13. The method for producing a filler according to claim 11, wherein the mixture of material groups used is comminuted in a cross-flow screen grinder to produce fibrous particles.

14. The method for producing a filler according to one of claims 11 or 12, wherein the comminuted mixture of material groups is combined in a conventional mixer with solid aluminium sulphate (Al(SO₄)₃· xH₂O) together with calcium oxide or calcium hydroxide, and mixed, wherein the aluminium sulphate is used either anhydrous (x = 0) or with the water contents typically found in the trade (x > 0).

15. The method for producing a filler according to claim 13, wherein 5.5 to 6 mass % of anhydrous aluminium sulphate is used, based on the absolute dry mass of the comminuted mixture of material groups.

16. The method for producing a filler according to any one of claims 12 to 15, wherein the mass ratio of aluminium sulphate (Al(SO₄)₃) to calcium oxide (CaO) is 1:1.

17. The method for producing a filler according to any one of claims 12 to 16, wherein water is added until a target absolute moisture content of 30-40 mass % of the total mixture is achieved.

18. The method for producing a moulded article, comprising the steps of:
• providing a filler produced according to any one of claims 12 to 17;
• mixing the filler with cement and water, and placing the mixture into a mould or formwork to produce the moulded body;
• allowing the moulded body to set and removing the mould or formwork;
• curing the moulded body for a defined number of days.

19. The method for producing a moulded body according to claim 18, wherein, in addition to cement and water, kaolin and calcium formate are also mixed with the filler.

## Revendications

1. Une charge destinée à la fabrication de pièces moulées liées au ciment, comprenant un mélange de groupes de substances constitué d'un mélange de matériaux issus de résidus broyés et triés, conditionnés avec des réactifs chimiques/composés en présence d'eau, les réactifs chimiques étant du sulfate d'aluminium et de l'oxyde de calcium ou du sulfate d'aluminium et de l'hydroxyde de calcium, le mélange de matières résiduelles broyées et triées comprenant des matériaux choisis parmi chacun des groupes suivants, comprenant les groupes de matières:
• PPK, composé de papier, de carton et d'emballages en carton ;
• les plastiques ; et
• les matériaux inertes, composés de verre, de céramique, de porcelaine, de pierres et de faïence ; et
• textiles ; et
• le bois,
les groupes de matériaux utilisés étant présents, en pourcentage de la masse sèche relative, à raison de 20 % de masse sèche de PPK, 40 % de masse sèche de matières plastiques, 20 % de masse sèche de matériaux inertes, 15 % de masse sèche de textiles, ainsi que 5 % de masse sèche de bois.

2. La charge selon la revendication 1, dans laquelle les groupes de matériaux utilisés se présentent au moins en partie sous forme de particules fibreuses.

3. La charge selon la revendication 1, dans laquelle on utilise, par rapport à la masse sèche absolue du mélange broyé des groupes de matériaux, 5,5 à 6 % en masse de sulfate d'aluminium anhydre.

4. La charge selon l'une des revendications 1 à 3, dans laquelle le rapport massique entre le sulfate d'aluminium (Al(SO₄)₃) et l'oxyde de calcium (CaO) est de 1:1.

5. La charge selon l'une des revendications précédentes, dans laquelle le mélange présente une teneur en humidité comprise entre 30 et 40 % en masse.

6. Un corps moulé fabriqué à partir de la charge selon l'une des revendications 1 à 5 précédentes, qui est transformé avec du ciment et de l'eau pour former le corps moulé lié au ciment.

7. Le corps moulé selon la revendication 6, dans lequel la quantité de ciment est de 70 ± 1 % en masse par rapport à la masse sèche de la charge.

8. Le corps moulé selon la revendication 6, dans lequel, afin d'augmenter la résistance mécanique du corps moulé, il contient, outre la charge, le ciment et l'eau, du kaolin et du formiate de calcium.

9. Le corps moulé selon la revendication 8, dans lequel on utilise 6 % en masse de formiate de calcium Ca(HCOO)₂ dissous dans de l'eau, par rapport à la masse sèche absolue de la charge.

10. Le corps moulé selon l'une des revendications 6 à 9, dans lequel la quantité de ciment est de 60 ± 1 % en masse par rapport à la masse sèche de la charge.

11. Le corps moulé selon la revendication 8, dans lequel la masse de kaolin ajoutée représente 9 à 9,5 % en masse par rapport à la masse de ciment utilisée.

12. Un procédé de fabrication d'une charge comprenant les étapes suivantes :
• la préparation d'un mélange comprenant un mélange de groupes de matières constitué d'un assemblage de matériaux issus de déchets broyés et triés, conditionné avec des réactifs/composés chimiques en présence d'eau, le mélange de groupes de matières constitué de déchets broyés et triés comprenant des matériaux choisis parmi chacun des groupes suivants, comprenant les groupes de matières :
i. PPK, composé de papier, de carton et d'emballages en carton;
ii. les plastiques ; et
iii. les matériaux inertes, composés de verre, de céramique, de porcelaine, de pierres et de faïence ; et
iv. textiles ; et
v. le bois,
les groupes de matériaux utilisés étant présents, en pourcentage de la masse sèche relative, à raison de 20 % de PPK, 40 % de matières plastiques, 20 % de matériaux inertes, 15 % de textiles et 5 % de bois,
• broyage du mélange de groupes de matériaux et homogénéisation du mélange de matériaux broyés ;
• ajout des réactifs chimiques suivants: sulfate d'aluminium associé à de l'oxyde de calcium ou de l'hydroxyde de calcium, et de l'eau ;
• stockage du mélange pendant une durée de réaction définie comprise entre 1 et 3 jours.

13. Le procédé de fabrication d'une charge selon la revendication 11, dans lequel le mélange de groupes de substances utilisé est broyé dans un broyeur à tamis à flux transversal afin de produire des particules fibreuses.

14. Le procédé de fabrication d'une charge selon l'une des revendications 11 ou 12, dans lequel le mélange de groupes de substances broyé est mélangé dans un mélangeur conventionnel avec du sulfate d'aluminium solide (Al(SO₄)₃) · xH₂O) ainsi qu'avec de l'oxyde de calcium ou de l'hydroxyde de calcium, le sulfate d'aluminium étant utilisé sous forme anhydre (x = 0) ou avec les teneurs en eau typiquement rencontrées dans le commerce (x > 0).

15. Le procédé de fabrication d'une charge selon la revendication 13, dans lequel on utilise 5,5 à 6 % en masse de sulfate d'aluminium anhydre par rapport à la masse sèche absolue du mélange de groupes de matières broyées.

16. Le procédé de fabrication d'une charge selon l'une des revendications 12 à 15, dans lequel le rapport massique entre le sulfate d'aluminium (Al(SO₄)₃) et l'oxyde de calcium (CaO) est de 1:1.

17. Le procédé de fabrication d'une charge selon l'une des revendications 12 à 16, dans lequel on ajoute de l'eau jusqu'à ce qu'une humidité absolue cible du mélange total de 30 à 40 % en masse soit atteinte.

18. Un procédé de fabrication d'un corps moulé, comprenant les étapes suivantes :
• la mise à disposition d'une charge préparée selon l'une des revendications 12 à 17 ;
• mélanger la charge avec du ciment et de l'eau, puis couler la pâte dans un moule ou un coffrage pour fabriquer le corps moulé ;
• la prise du corps moulé et le retrait du moule ou du coffrage ;
• le durcissement de l'élément moulé pendant un nombre défini de jours.

19. Le procédé de fabrication d'un élément moulé selon la revendication 18, dans lequel, outre le ciment et l'eau, du kaolin et du formiate de calcium sont également mélangés à la charge.
